# EUROPEAN PATENT APPLICATION

(11) **EP 2 871 043 A1**
(43) Date of publication of application: **13.05.2015**
(21) Application number: 13382450.8
(22) Date of filing: 07.11.2013
(51) Int. Cl.: B29C 67/00

(54) **Horizontal feeder system for additive manufacturing devices**

(71) Applicant: MARCHA TECHNOLOGY S.L., 31191 Esquiroz de Galar, Navarra (ES)
(72) Inventor: Martin Gavi, Oscar, 31110 Noain, Navarra (ES); Chavalet Pinero, Lorenzo, 31180 Zizur Mayor, Navarra (ES)
(74) Representative: Carlos Hernando, Borja

(57) **Abstract**

Horizontal feeder system for additive manufacturing devices and an additive manufacturing device, a feeder system being located inside the device and said feeder system being located on a horizontal plane.

## Description

### Technical field

The present invention refers to a horizontal feeder system for additive manufacturing devices, also known as a fused deposition or 3D printing model when material is added, for use in pieces of apparatus or devices which serve in the manufacturing of said additive.

This system falls within the production or manufacturing sector, specifically in thread feeder additive manufacturing devices.

### Background of the invention

In the state of the art, fused deposition modelling processes are known about, which consist of processes for modelling prototypes and small scale production.

Fused deposition modelling uses an additive manufacturing technique, which consists of depositing the material, whether plastic or metal, in layers, in order to form a piece. The material, supplied in solid filaments initially stored in rolls, is introduced into an extrusion nozzle. This nozzle, which may be displaced on three axles, is above the fusion temperature of the material to be added, in such a way that when the filament crosses the nozzle, it melts in order to be added to the piece in the form of fine threads, where it solidifies almost immediately after having come out of the nozzle. The nozzle is controlled electronically and moved by motors. The manufacturing material may be melted by the nozzle in layers which differ in thickness, in such a way that these layers are deposited from bottom to top.

In these kinds of additive manufacturing devices, the feeding of the nozzle with the solid material, fed from the rollers, is carried out from the upper part of the same, vertically, with the horizontal support plane of the device. This limitation in feeding from the nozzle makes it necessary to use feeding systems which extend above the upper cover of the device in order to thus derive benefit from the internal capacity of the same in all its height and manufacture higher pieces. The material feeder roller in these devices is usually located in the upper part of the same, so that the supply to the nozzle is directly vertical. Another option consists of making the feeder roller available in the rear part of the manufacturing device and by means of an external guide channel, transport the filament from the roller in the rear part towards the upper part of the device above the manufacturing device cover.

Therefore, the nozzle feeder devices known about are not compact, which is inconvenient for certain reasons, for example:
- It prevents the manufacturing device being closed on its entire upper surface, delimiting the manufacturing space and making the internal mechanisms inaccessible to the user, which implies greater safety for both the user and the device,
- It prevents the added material from being exposed to the outside,
- It prevents the manufacturing device from being manipulated and transported, without risk to either the user or the device itself,
- It prevents the upper use of the device for locating objects and
- It prevents similar manufacturing devices from being stacked, with the aim of creating columns and optimising space.

### Summary of the invention

The present invention proposes a feeder system for additive manufacturing devices or machines, which makes it possible to have a compact and secure additive manufacturing device, without external channels and without external elements other than the material feeder roller or reel.

The invention refers to a horizontal feeder system for additive manufacturing devices, in which the material to be added is a thread, made of plastic or metal material, stored in a reel or roller arranged outside the device, usually in the rear part of the same. Said horizontal feeder system comprises a flexible channel or tube which circles horizontally and on a same plane, from the external reel, by the upper part of the inside of the device in its two first stretches which are parallel to the side walls of the device, in order for a curved trajectory to subsequently follow said channel or tube, which during its operation, changes shape and assumes different curvatures. Preferably, when the machine is resting, the curved trajectory represents the Fibonacci curve or golden spiral, until the nozzle or extruder is reached, through which the melted thread comes out. The advantage of describing a trajectory like the Fibonacci curve or golden spiral is that the friction between the material thread and the tube or channel is reduced by half.

According to claim one, a first aspect of the invention is therefore a horizontal feeder system for additive manufacturing devices, the addition material of which is a thread arranged a reel which comprises a channel or tube arranged on a horizontal plane inside the manufacturing device with an end stretch that describes a trajectory according to the Fibonacci curve or golden spiral.

Likewise, the nozzle or extruder is located in an addition module or cart, which in turn comprises a rotational support for guiding the tube. Said rotational support comprises a rigid support which rotates around a rotational coupling. The rigid support enables the tube to rotate by 90° from a horizontal plane to a vertical plane, being connected to the extruder or nozzle on said vertical plane and thus enabling the nozzle to apply the material from bottom to top within the working area of the manufacturing device. The rigid support may be a set-square shaped piece or a piece with three angles stretches which is crossed over its end stretches by the tube or channel.

A second aspect of the invention is a manufacturing device which comprises a feeder system of the above described variety.

### Brief description of the drawings

The above and other advantages and characteristics may be understood more fully based on the following detailed description of the embodiments, with reference to the attached figures, which should be considered as a non-limiting example thereof, wherein:

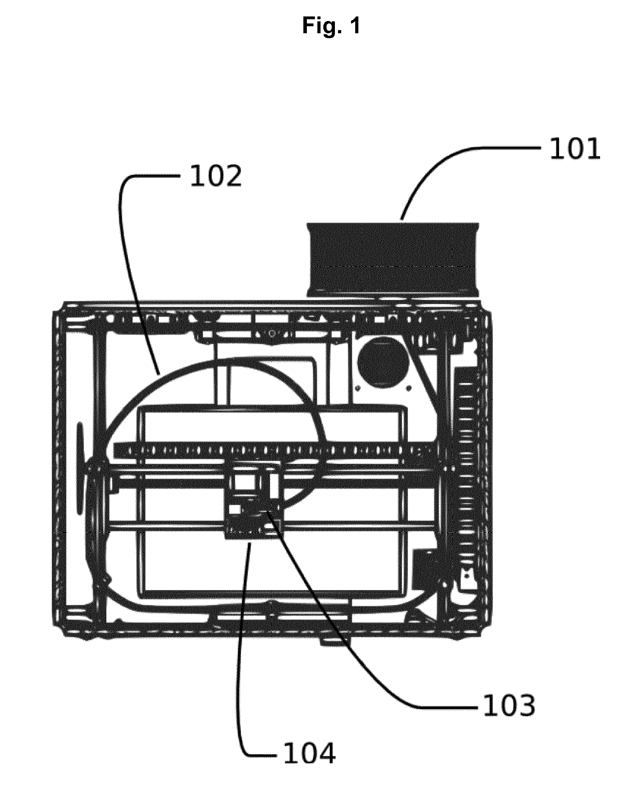

Figure 1 is a plan view of the uncovered manufacturing machine or device, wherein the horizontal feeder system is shown.

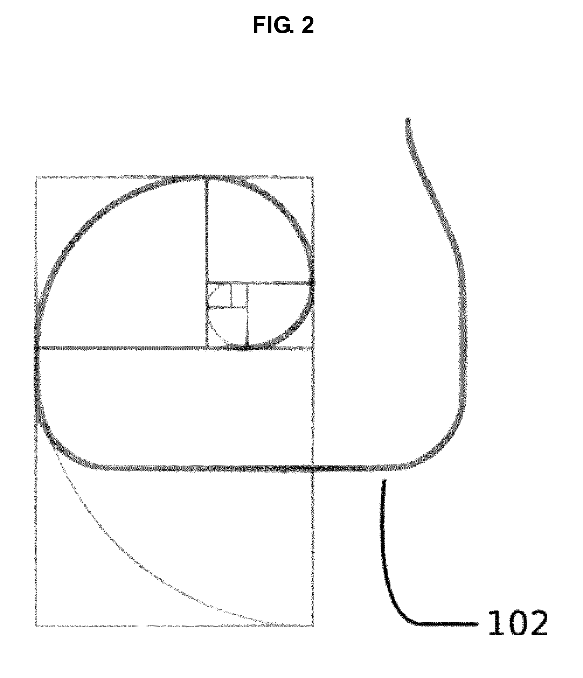

Figure 2 is an overview of the horizontal trajectory based on the curve or spiral described by the guide tube or channel.
Figure 3 is a rotational system for guiding the tube or channel.

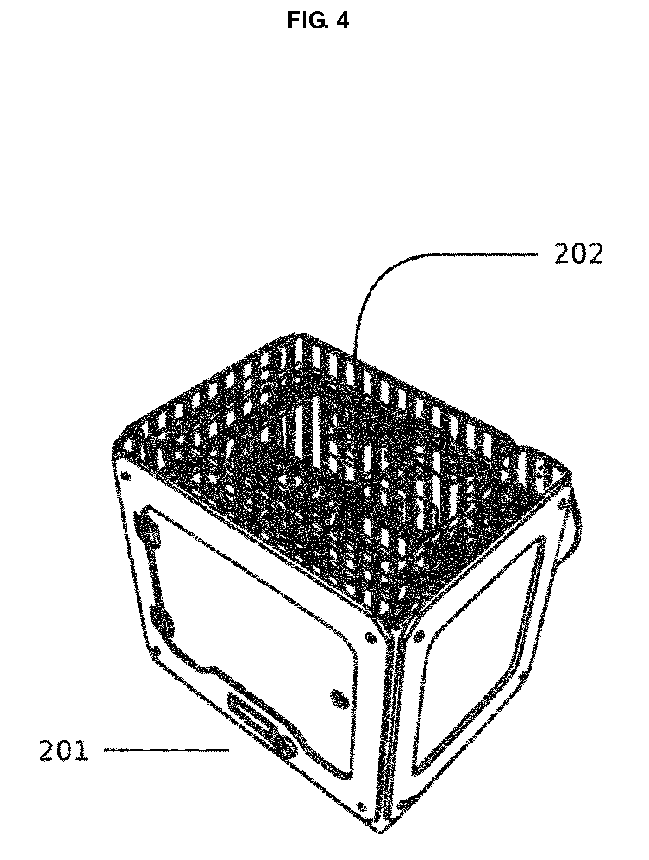

Figure 4 is a perspective view of the machine or device, wherein it is possible to observe the closed upper surface.

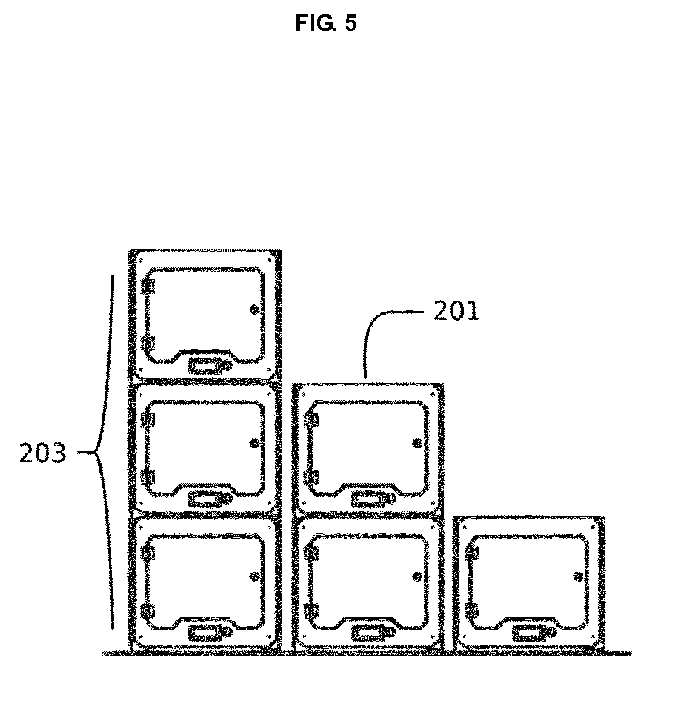

Figure 5 is an example of stacking various manufacturing machines or devices.

### Detailed description of the invention and description of a preferred embodiment

The present invention proposes a horizontal feeder system for additive manufacturing devices, as well as an additive manufacturing device comprised by said feeder system, thereby facilitating the horizontal feeding of the nozzle or extruder inside the machine from the roller or reel that stores the feeder thread.

The additive manufacturing machine or device (201) comprises four side surfaces and a lower surface, which delimit the machine's components, as well as the working area or adding area. The upper surface (202) is a removable horizontal lid which closes the manufacturing machine or device (201) completely. In the external and rear portion of the same, there is a reel or roller with the adding material. Said adding material, which may be plastic or metal, is presented in the form of thread or filament rolled around the reel or roller (101). Said material is transported horizontally via a tube or channel (102), made of plastic material and preferably PTFE, from the point where the thread enters the machine (201) until the point where it leaves the reel (101) and reaches a cart or addition module (104), in which the nozzle or extruder is arranged, where the material comes out to the exterior. This material is stored in a solid state on the reel (101) and after circulating around the horizontal feeder system, reaches the extruder, where the material is melted to be applied to the piece to be manufactured and after having left the extruder, said material quickly solidifies.

The horizontal trajectory described by the tube (102) from the external reel (101) is made by the upper portion of the inside of the device and, in the example shown, in its first two stretches, said trajectory is parallel to the side surfaces of the device and subsequently, said tube (102) continues along a curved trajectory, which preferably corresponds to the Fibonacci curve or golden spiral, until it reaches the nozzle or extruder located in the cart (104).

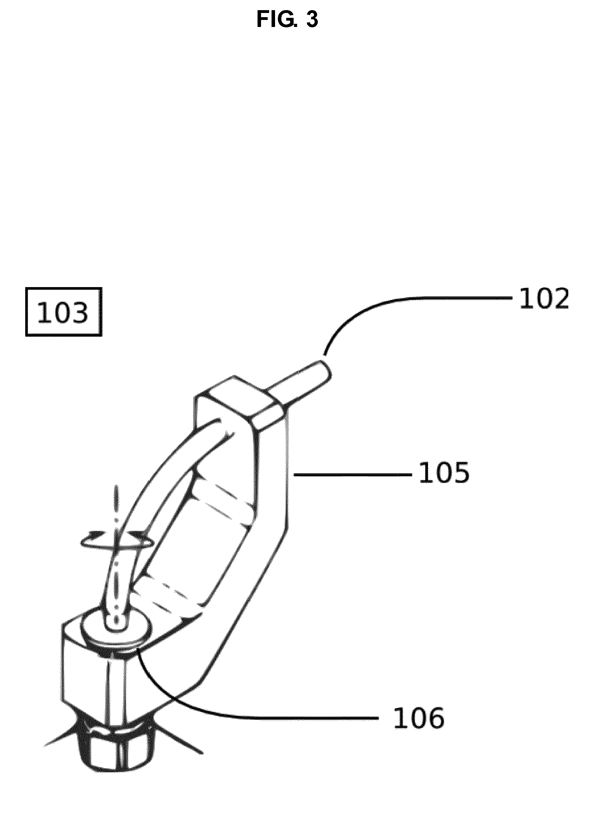

Owing to the fact that the cart (104) is able to travel along the horizontal plane, with the aim of being able to guide the tube or channel (102), it has a rotational support (103), which enables the shape of the tube (102) to be modified, owing to the cart (104) being displaced. This rotational support (103) comprises a rigid support (105), which rotates around a rotational coupling (106). The rigid support (105) may be a piece with three angled stretches, which is crossed at its end stretches by the tube (102) and which makes it possible for the same to change its direction by 90°, from a horizontal plane to a vertical plane, as shown in Figure 3. In order for displacement to take place on a vertical plane of the nozzle or extruder, it is the base that supports the piece which is displaced upwards.

The above described feeder system makes it possible to provide an additive manufacturing machine or device (201) without external guide components, thereby making it possible to close the upper surface (202) of the machine and impeding access to the working area for safety reasons and in turn making it possible to optimise the available space, making it possible to stack the machines (201) by forming nested groups (203).

## Claims

1. Horizontal feeder system for additive manufacturing devices, the adding material of which being a thread arranged on a reel (101), **characterised in that** it comprises a channel or tube (102) arranged on a horizontal plane inside the manufacturing device (201) with an end stretch that describes a curved trajectory.

2. System according to claim 1, **characterised in that** the curved trajectory of the end stretch represents the Fibonacci curve or golden spiral.

3. System according to claim 1 or 2, **characterised in that** the end of the curved trajectory of the tube (102) comprises an addition module or cart (104), where a nozzle or extruder is located.

4. System according to claim 3, **characterised in that** said cart (104) comprises a rotational support (103) with a rigid support (105) which changes the direction of the tube (102) by 90° from a horizontal plane to a vertical plane and which rotates around a rotational coupling (106).

5. System according to claim 4, **characterised in that** said rigid support (105) comprises three angled stretches, the end stretches being crossed by the tube (102).

6. Additive manufacturing device (201), the adding material of which is a thread arranged on a reel (101), this device also comprising four side surfaces and a lower surface, **characterised in that** it comprises a feeder system according to claims 1 to 4.

7. Device according to claim 6, **characterised in that** it comprises an upper horizontal surface (202) which closes the device (201) completely.

8. Device according to claim 6, **characterised in that** the reel (101) is arranged in the external and rear portion of the device (201).
